# NEUE EUROPÄISCHE PATENTSCHRIFT

(11) **EP 0 669 227 B2**
(45) Veröffentlichungstag und Bekanntmachung des Hinweises auf die Entscheidung über den Einspruch: **16.04.2003**
(45) Hinweis auf die Patenterteilung: 22.07.1998
(21) Anmeldenummer: 94120369.7
(22) Anmeldetag: 22.12.1994
(51) Int. Cl.: B60R 21/00

(54) **Vorrichtung zur Erkennung der Sitzbelegung in Fahrzeugen**
Device for detecting the occupation of a vehicle seat
Installation pour reconnaître d'occupation de siège dans un véhicule

(30) Priorität: 12.01.1994 DE 4400664
(43) Veröffentlichungstag der Anmeldung: 30.08.1995
(73) Patentinhaber: Conti Temic microelectronic GmbH, 90411 Nürnberg (DE)
(72) Erfinder: Spies, Martin, D-85276 Pfaffenhofen (DE)

(56) Entgegenhaltungen:
- EP-A- 0 473 324
- DE-A- 4 005 598
- DE-A- 4 112 579
- GB-A- 2 236 419
- US-A- 4 625 329

## Beschreibung

Es sind eine Reihe von Vorrichtungen zur Erkennung der Sitzbelegung bekannt, die nach folgenden Verfahren arbeiten:
- Matten im Sitzbereich mit Druckerkennung,
- Druckerkennung am Sitzgestell,
- Nutzung der Hochfrequenzdämpfung,
- Nutzung der Kapazitätsänderung.

Alle diese Systeme weisen den Nachteil auf, daß sie einerseits nicht genügend Unterscheidungsschärfe in der Art der Sitzbelegung aufweisen, andererseits nicht in der Lage sind z.B. Kindersitze zu erkennen.

So weist beispielsweise die Druckschrift GB 22 36 415 A eine Sicherheitseinrichtung für Kraftfahrzeuge auf, bei der mittels einer Lichtschranke geprüft wird, ob sich eine Person auf dem Sitz befindet. Dieser Druckschrift ist auch zu entnehmen, daß dafür ein auf den Sitz gerichteter Lichtemitter, sowie ein Detektor verwendet werden können, welche sich vorzugsweise in der Fahrzeugarmatur befinden.

Die Druckschrift EP 0 473 324 A1 weist ebenfalls ein Verfahren zur Sitzbelegungserkennung auf, welches mittels Druck- und HF-Sensoren erkennen kann, ob sich eine Person auf dem Sitz befindet. Des weiteren sind auch den Schriften DE 41 12 579 A1 sowie DE 40 05 598 A1 Sensorsysteme zur Sitzbelegungserkennung zu entnehmen, die jedoch den Sitz immer nur punktuell kontrollieren und daher die Art der Sitzbelegung nicht voneinander unterscheiden können.

Darüber hinaus sind generell auch Kamerasysteme vorstellbar, die jedoch für die Massenproduktion im KFZ-Bereich viel zu teuer sind.

Der Anmeldung liegt die Aufgabe zugrunde, die Einrichtung zur Erfassung des Bildes eines Fahrzeugsitzes in einer Vorrichtung zur Erkennung der Sitzbelegung in Fahrzeugen etc. einfacher und billiger auszubilden.

Die Lösung besteht erfindungsgemäß in einer Einrichtung nach den kennzeichnenden Merkmalen des Patentanspruches 1.

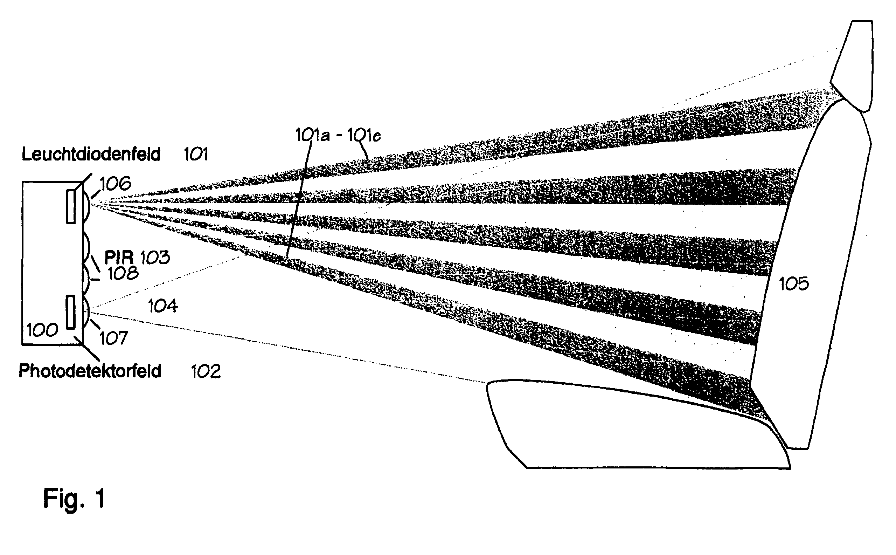

Entsprechend Figur 1 besteht die Vorrichtung zur Erkennung der Sitzbelegung (100) aus einem Feld (101) von Sendern, wie z. B. Leuchtdioden (101a bis 101e), die den Sitz (105) über die Sendeoptik (106) mit z. B. 5 Lichtpunkten beleuchten. Die Empfangsoptik (107) bildet die Fläche des Sitzes auf ein lineares oder flächiges Photodetektor-Feld (102) ab. Aus der geometrischen Zuordnung der Fläche des Sitzes zu den einzelnen Empfangsflächen des Photodetektor-Felds wird in einem Mikroprozessor die Kontur des Sitzes ermittelt und daraus folgendes abgeleitet:
- Sitz belegt oder nicht belegt;
- Kindersitz auf dem Sitz angebracht, einfach erkennbar durch seine Kontur unabhängig vom jeweiligen Fabrikat;
- es befindet sich etwas zwischen Sensor und Sitz;
- Die Person hat sich inzwischen z. B. zum Armaturenbrett hin verlagert;

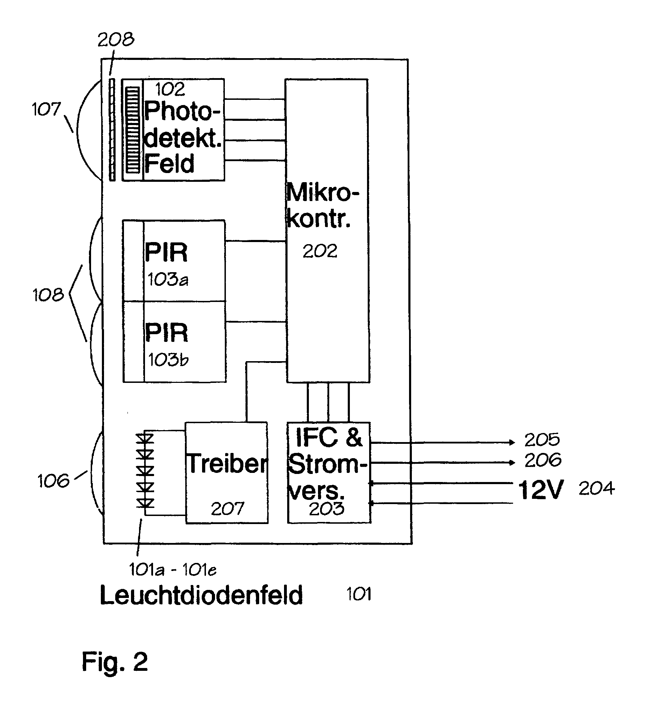

Um auch eine Unterscheidung von Personen und Gegenständen durchführen zu können, ist noch ein pyroelektrischer Sensor (103) aus z: B. 2 pyroelektrischen Folien, die über die Optiken (108) auch auf den Sitz abgebildet werden, vorgesehen.
Die Vorrichtung zur Erkennung der Sitzbelegung kann im Bereich des Armaturenbrettes (am Luftsack-Aktuator) oder im Dachhimmelbereich oder im Bereich des Rückspiegels eines Fahrzeuges untergebracht werden. Die Vorrichtung ist entsprechend Figur 2 aufgebaut. Über die Sendeoptik (106) wird ein Leuchtdiodenfeld (101a bis 101e) abgebildet, das von einem Treiber (207) gepulst angesteuert wird. Die rückgestreute Energie wird über die Empfängeroptik (107) und ein Filter (208) dem Photodetektor-Feld (102) zugeführt. Die Zuordnung der Verteilung der rückgestreuten Energie wird im Mikroprozessor (202) vorgenommen. Die Verteilung ergibt die Kontur des Sitzes oder der Personen oder Gegenstände und den Abstand dieser Kontur vom Sensor. Der Mikroprozessor hat signifikante Konturen gespeichert. Damit ist eine gute Unterscheidung der wichtigsten Belegungsarten wie Person, Kindersitz, Gegenstand möglich geworden. Gleichzeitig wird die Infrarotemission über die Empfangsoptik (108) auf die pyroelektrischen Detektoren (103a und 103b) gebracht und dort die Änderung zur Auswertung an den Mikroprozessor ausgegeben. Das Gesamtgerät hat eine Spannungsversorgung und eine Schnittstelle (203) zum Fahrzeug. Hierüber erfolgt die Spannungsversorgung mit z. B. 12V (204) und die Ausgabe der Information über Logikpegel (205 u. 206).

## Patentansprüche

1. Vorrichtung zur Erkennung der Sitzbelegung in Fahrzeugen,
- bei der ein auf den Sitz gerichteter Lichtemitter (101) sowie ein Detektor (102) vorgesehen sind, wobei der Detektor (102) die am Sitz oder der darauf befindlichen Person auftretenden Reflektionen empfängt
- und mit einem Prozessor (202) eine Auswertung erfolgt,
**dadurch gekennzeichnet, daß** eine Einrichtung (100) zur Erfassung eines linearen oder flächigen Bildes des Sitzes vorgesehen ist, bestehend aus
a) einer Anzahl von auf den Sitz gerichteten Lichtemittern (101), die mehrere einzelne Leuchtflecken ausbilden, um die kontur des Sitzes in Form von Leuchtflecken zu erfassen und
b) einem Photodetektorenfeld (102), das in einer definierten Entfernung vom Sitz angeordnet ist, und auf dessen Empfangsflächen die einzelnen Leuchtflecken über die Fläche des Sitzes abgebildet werden
und mit dem Prozessor (202), das erfaßte Bild verarbeitet wird, indem aus der geometrischen Zuordnung der auf der Fläche des Sitzes abgebildeten einzelne Leuchtflecken zu den beleuchteten Empfangsflächen des Photodetektors die Kontur des Sitzes ermittelt wird, wobei die Belegung des Sitzes mit einer Person, mit einem Gegenstand, oder ein nicht belegter Sitz unterscheidbar ist. >

2. Vorrichtung zur Erkennung der Sitzbelegung nach Anspruch 1 **dadurch gekennzeichnet, daß** zusätzlich die Infrarotstrahlung von Personen genützt wird um Personen von Gegenständen zu unterscheiden.

3. Vorrichtung zur Erkennung der Sitzbelegung nach Anspruch 1 oder 2 **dadurch gekennzeichnet, daß** das System am Beifahrer-Luftsack angebracht ist.

4. Vorrichtung zur Erkennung der Sitzbelegung nach einem der Ansprüche 1 oder 2 **dadurch gekennzeichnet, daß** sie am Dachhimmel oder im Bereich des Rückspiegels angebracht ist.

## Claims

1. Device for recognising seat occupancy in vehicles,
- in which a light emitter (101) directed at the seat as well as a detector (102) receives the reflections occurring on the seat or on the person located thereon,
- and evaluation takes place with a processor (202).
**characterised in that**
an arrangement (100) for detecting a linear or two-dimensional image of the seat is provided, consisting of:
a) a plurality of light emitters (101) which are directed at the seat and which form a plurality of individual spots of light, in order to detect the contour of the seat in the form of spots of light, and
b) a photodetector array (102) which is disposed at a defined distance from the seat, and on the receiving surfaces of which the individual spots of light over the surface of the seat are imaged,
and the detected image is processed with the processor (202) **in that**, from the geometric association of the individual spots of light imaged on the surface of the seat, there is determined the contour of the seat, so that it is possible to distinguish between the seat being occupied by a person, by an object or not being occupied.

2. Device for recognising seat occupancy as claimed in Claim 1, **characterised in that** in addition the infrared radiation from persons is used in order to distinguish persons from objects.

3. Device for recognising seat occupancy as claimed in Claim 1 or 2, **characterised in that** the system is mounted on the passenger airbag.

4. Device for recognising seat occupancy as claimed in one of Claims 1 or 2, **characterised in that** it is mounted on the roof or in the region of the rear-view mirror.

## Revendications

1. Installation de reconnaissance de l'occupation d'un siège dans des véhicules,
-- dans le cas de laquelle sont prévus un émetteur de lumière (101) orienté sur le siège ainsi qu'un détecteur (102), le détecteur (102) recevant les réflexions qui se produisent sur le siège ou sur la personne qui s'y trouve,
-- et un traitement se fait au moyen d'un processeur (202),
**caractérisée par le fait**
**que**, pour saisir une image linéaire ou surfacique du siège, est prévu un dispositif (100) constitué de
(a) un certain nombre d'émetteurs de lumière (101) orientés sur le siège, qui produisent plusieurs taches lumineuses individuelles, pour saisir le contour du siège sous forme de taches lumineuses, et
(b) à une distance définie du siège est disposé un champ de photodétecteurs (102) sur les surfaces réceptrices desquels se forment les images des taches lumineuses individuelles sur la surface du siège,
et **que** l'image saisie est traitée par le processeur (202), en déterminant le contour du siège à partir de l'association géométrique des images des taches lumineuses individuelles produites sur la surface du siège par rapport aux surfaces réceptrices éclairées du photodétecteur, et l'occupation du siège par une personne, par un objet ou un siège non occupé pouvant être distingués.

2. Installation de reconnaissance de l'occupation d'un siège selon la revendication 1, **caractérisée par le fait qu'**est en outre utilisé le rayonnement infrarouge des personnes pour distinguer des personnes d'avec des objets.

3. Installation de reconnaissance de l'occupation d'un siège selon la revendication 1 ou 2, **caractérisée par le fait que** le système est logé sur le coussin gonflable de l'occupant voisin du conducteur.

4. Installation de reconnaissance de l'occupation d'un siège selon la revendication 1 ou 2, **caractérisée par le fait qu'**elle est installée sur le pavillon ou dans la zone du rétroviseur.
